# EUROPEAN PATENT APPLICATION

(11) **EP 4 484 187 A1**
(43) Date of publication of application: **01.01.2025**
(21) Application number: 24178239.0
(22) Date of filing: 27.05.2024
(51) Int. Cl.: B60J 1/04, B60J 1/06

(54) **MOTOR VEHICLE WINDSHIELD AND MOTOR VEHICLE PROVIDED WITH SUCH WINDSHIELD**

(30) Priority: 29.06.2023 IT 202300013500
(71) Applicant: Automobili Pininfarina GmbH, 81673 Muenchen (DE)
(72) Inventor: BESENZON, Vittorio, 10143 Torino (IT); GELMI, Monica, 10128 Torino (IT); DI FAZIO, Antonio Armando, 10121 Torino (IT); CUNDARI, Francesco, 84010 Furore (Salerno) (IT)
(74) Representative: Buzzi, Notaro & Antonielli d'Oulx S.p.A.

(57) **Abstract**

Windshield for motor vehicles having a driving station and a passenger station arranged side by side to the driving station, comprising two windshield parts (4, 5) separated from each other and angularly displaceable in a motor-driven manner and independently between a lowered position and a raised position around a lower transversal axis (7).

## Description

### Field of the invention

The present invention generally relates to windshields for motor vehicles, and more particularly it relates to an open motor vehicle for example of the convertible type and more particularly of the so-called "barchetta" or "torpedo" type, that is entirely roofless.

### State of the art

Vehicles provided with a windshield or more precisely with a fairing arranged in front of the driver and which can be displaced between a lowered position and raised position are disclosed, with particular reference to motorcycles, by documents EP-1291274B1 and EP-1752367B1. Documents EP-06853895B1 and GB-486067A describe a windshield with variable inclination which can be applied to vehicles in general.

These prior art solutions are expressly limited to the windshield of the driver of the vehicle. Furthermore, the actuation system of the windshield is generally complex and cumbersome.

Document FR-602139A describes a windshield formed by two parts arranged adjacent to each other each of which is angularly displaceable independently and manually around an upper articulation axis.

Document DE-102005004809B3 describes a windshield made of a single piece which can be displaced in a motor-driven manner between a raised position and a lowered position by sliding, by virtue of a travel of the windshield respectively downwards and upwards.

### Summary of the invention

The object of the present invention is to overcome the aforementioned drawbacks, and to provide a windshield specifically for motor vehicles, configured so as to able to carry out a useful function not only with respect to the driver but also to the passenger located aside the driver.

According to the invention, this object is primarily attained due to a windshield for motor vehicles as defined in claim 1.

In an embodiment of the invention, the at least one or each of the two windshield parts has a front articulation and a raisable and lowerable internal support frame with which there is associated an actuation mechanism which conveniently includes a horizontal actuator. The horizontal actuator preferably consists of an electric jack arranged beneath the windshield part and connected to the support frame by means of an articulated linkage.

According to a preferred embodiment of the invention, the articulated linkage comprises a generally triangular-shaped rotary cam having a first vertex articulated to the electric jack, a second vertex with which there is articulated the lower end of a substantially vertical connecting rod whose upper end is articulated to the windshield support, and a third vertex pivoted around a horizontal rotation axis of the cam.

The windshield part associated with the driving station is conveniently larger than the windshield part associated with the passenger station.

The invention also relates to a motor vehicle provided with a windshield thus made, as well as an actuation device of the windshield.

### Brief description of the drawings

The invention will now be described in detail with reference to the attached drawings, provided purely by way of non-limiting example, wherein:
- figure 1 is a schematic perspective view which shows the front part of the passenger compartment of a motor vehicle provided with a windshield according to the invention, shown in a first condition,
- figure 2 is a view similar to figure 1 with the windshield shown in a second condition,
- figure 3 is a front perspective view which shows one of the two windshield parts according to the invention,
- figure 4 is a vertical cross-sectional schematic view and in larger scale of the windshield part of figure 3, shown in the condition of figure 1, and
- figure 5 is a view similar to figure 4 which shows the windshield part of figure 3 in the condition of figure 2.

### Detailed description of the invention

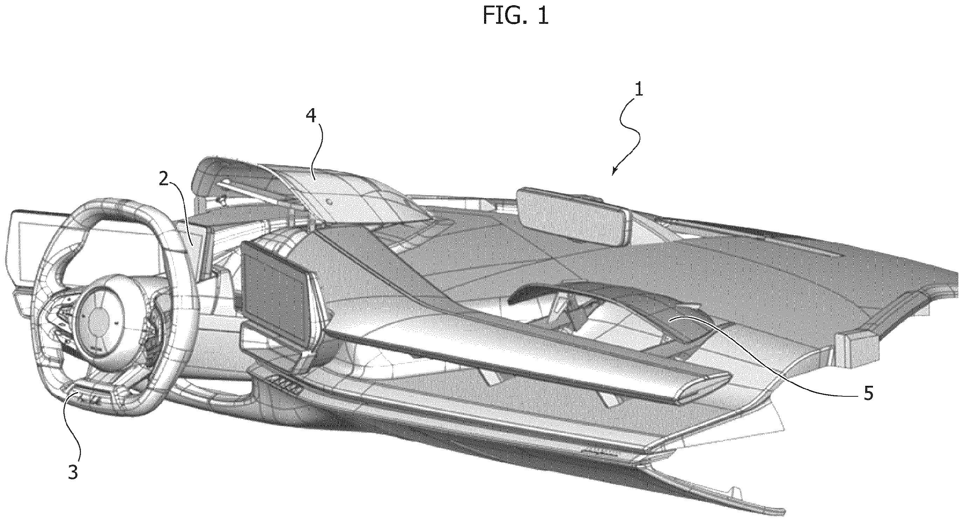

Initially with reference to figure 1, the front part of the passenger compartment of a motor vehicle, for example of a sports car of the "barchetta" type, having a dashboard 2 and a steering wheel 3 located in front of a station with driving seat not shown, side by side of which there is arranged a station with a passenger seat, also not shown, is generally indicated with 1.

According to the distinctive characteristic of the invention, the motor vehicle is provided with a windshield formed by two normally transparent windshield parts 4, 5 separate from each other and movable independently as clarified below.

The windshield part 4 is arranged in front of the steering wheel 3 that is the driving station, while the windshield part 5 is located in front of the passenger station.

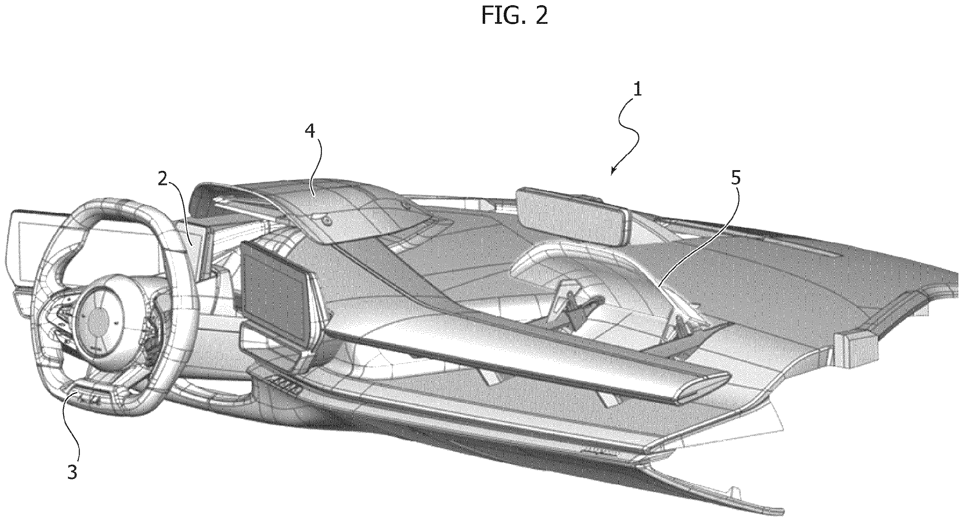

The two windshield portions 4, 5 are angularly displaceable selectively and independently between a lowered position and a raised position: figure 1 shows the windshield part 4 in raised position and the windshield part 5 in lowered position, while figure 2 shows the windshield part 4 in lowered position and the windshield part 5 in raised position. Obviously, the windshield parts 4 and 5 could be positioned at the same time both in raised position or in lowered position.

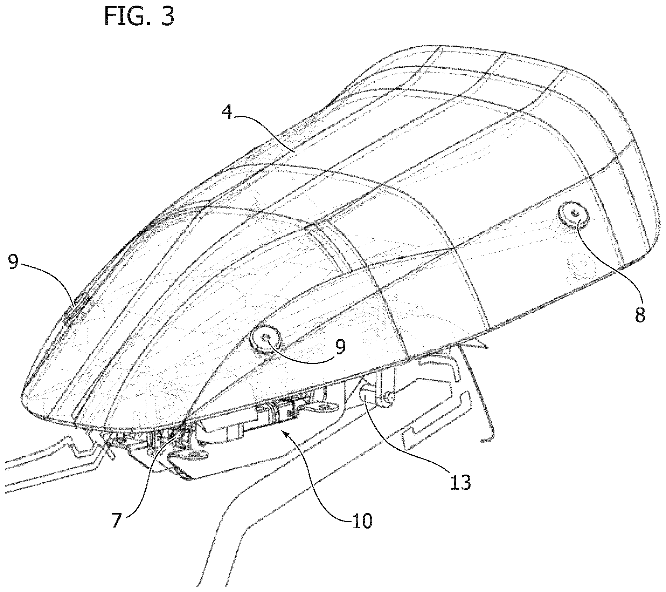

As shown in greater detail in figure 3 the windshield part 4 is generally shaped like a relatively long and narrow fairing (similar to that of a sports motorcycle, but larger), differently from the windshield part 5 which is substantially shaped like a deflector, preferably smaller than the windshield part 4.

Each windshield part 4, 5 has a front edge articulated beneath the structure of the vehicle around a respective axis 7 substantially horizontal and orthogonal to the longitudinal axis of the vehicle.

Each of the windshield parts 4, 5 articulated at the front part and beneath the structure of the vehicle around the transversal axis 7 is raisable and lowerable around such axis for a limited angular field, for example in the order of 20°-30° or more.

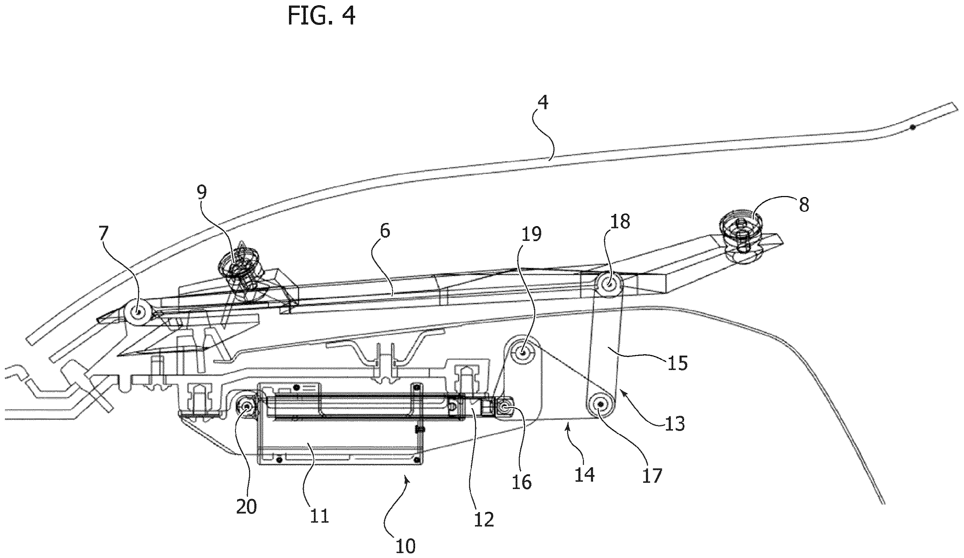

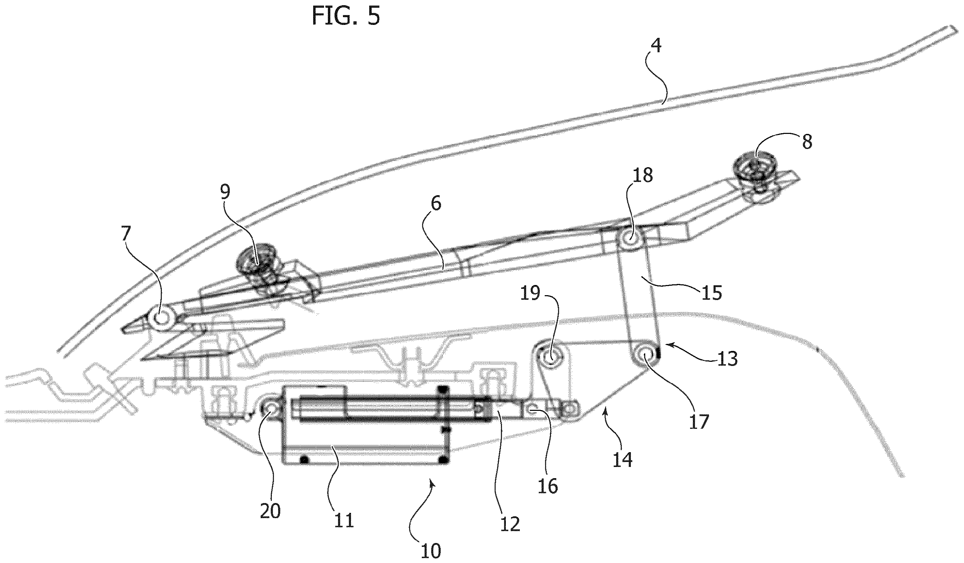

The angular displacement of each windshield part 4, 5 is carried out by means of a respective motor-driven actuation mechanism controlled from inside the passenger compartment of the vehicle, independently for the driver and passenger, which will now be described in detail with reference to the figures 4 and 5 in relation to the windshield part 4, it being clear that the description below may also apply to the windshield part 5. Alternatively, the actuation mechanism of the windshield part 5 may be different and possibly simplified.

The windshield part 4 is carried by a support frame 6, which - at the front part - is rotatable around the horizontal/transversal articulation axis 7, and - at the rear part - it is provided with rest elements 8 for supporting the windshield part 4 from the inside. Further rest elements 9 may also be provided for in the front part of the support frame 6, for a greater stability of the windshield part 4.

The support frame 6 is connected to an actuation mechanism generally indicated with 10, comprising a horizontal actuator 11 recessed in the front part 2 of the vehicle beneath the windshield part 4 and consisting, for example, of an electric jack anchored at a rotation centre 20 thereof. The stem of the jack 11, indicated with 12, is connected to the rear area of the support frame 6 by means of an articulated linkage 13, including a generally triangular-shaped rotary cam 14 and a substantially vertical connecting rod 15 provided with a roto-translational movement. A first lower vertex 16 of the cam 14 is articulated to the stem 12 of the jack 11 and the other lower vertex 17 is articulated to the lower end of the connecting rod 15, whose upper end is articulated in 18 to the support frame 6. The upper vertex of the cam 14 is pivoted around a horizontal/transversal rotation axis 19 of the cam 14.

Figure 4 shows the lowered position of the windshield part 4: the stem 12 of the jack 11 - whose longitudinal stroke in the direction opposite to the forward travel direction of the vehicle - can be adjusted electronically, it is retracted and the cam 14 is arranged in a lowered angular position, keeping the connecting rod 15 in the position corresponding to a substantially horizontal condition of the frame 6.

Following the extension of the stem 12 of the jack 11, the cam 14 rotates in the anticlockwise direction, so as to roto-translate the connecting rod 15 upwards and move the frame 6 and the windshield part 4 therewith towards the raised position shown in figure 5. During the thrust carried out by the stem 12, the jack 11 is free to rotate around the rotation centre 20 thereof.

The actuation mechanism of the windshield part 5 may be entirely similar to the description outlined above, or possibly simplified from a construction standpoint, and it is also operated by means of an electric actuator. The two electric actuators can be controlled selectively and independently, so as to move the two windshield parts 4, 5 respectively at the discretion of the driver and of the passenger.

Obviously, the construction details and the embodiments of the invention may widely vary with respect to what has been described and illustrated, without departing from the scope of protection of the present invention as defined in the claims that follow.

## Claims

1. Windshield for motor vehicles having a driving station and a passenger station arranged side by side the driving station, comprising two windshield parts (4, 5) separated from each other and angularly displaceable independently from each other between a lowered position and a raised position, **characterised in that** said two windshield parts (4, 5) are articulated at a lower part thereof and are displaceable in a motor-driven manner.

2. Windshield according to claim 1, **characterised in that** at least one of said two windshield parts (4, 5) includes a raisable and lowerable support frame (6) having a front transversal articulation (7) and internal supports (8, 9) for the windshield part (4, 5) to which an actuation mechanism (10) including a horizontal actuator (11) is associated.

3. Windshield according to claim 2, **characterised in that** said horizontal actuator (11) consists of an electric jack arranged below the windshield part (4, 5) and connected to said support frame (6) by means of an articulated linkage (13).

4. Windshield according to claim 3, **characterised in that** said articulated linkage (13) comprises a generally triangular-shaped rotary cam (14) having a first vertex (16) articulated to said electric jack (11), a second vertex (17) with which there is articulated the lower end of a substantially vertical connecting rod (15), whose upper end is articulated to said support frame (6), and a third vertex pivoted around a horizontal rotation axis (19) of the cam (14).

5. Windshield according to one or more of the preceding claims, **characterised in that** the windshield part (4) associated with the driving station is larger than the windshield part (5) associated with the passenger station.

6. Motor vehicle, particularly a motor vehicle of the "barchetta" type, having a driving station and a passenger station arranged aside the driving station and a windshield arranged in front of said stations, wherein said windshield comprises two windshield parts (4, 5) separated from each other and angularly displaceable independently between a lowered position and raised position, **characterised in that** said two windshield parts (4, 5) are articulated beneath the motor vehicle and they can be displaced in a motor-driven manner.

7. Motor vehicle according to claim 6, **characterised in that** at least one of said two windshield parts (4, 5) includes a raisable and lowerable support frame (6) having a front transversal articulation (7) and internal supports (8, 9) for the windshield part (4, 5) with which an actuation mechanism (10) including a horizontal actuator (11) is associated.

8. Motor vehicle according to claim 7, **characterised in that** said horizontal actuator (11) consists of an electric jack arranged beneath the windshield part (4, 5) and connected to said support frame (6) by means of an articulated linkage (13).

9. Motor vehicle according to claim 8, **characterised in that** said articulated linkage (13) comprises a generally triangular-shaped rotary cam (14) having a first vertex (16) articulated to said electric jack (11), a second vertex (17) with which there is articulated the lower end of a substantially vertical connecting rod (15), whose upper end is articulated to said support frame (6), and a third vertex pivoted around a horizontal rotation axis (19) of the cam (14).

10. Motor vehicle according to one or more of claims 6 to 9, **characterised in that** the windshield part (4) associated with the driving station is larger than the windshield part (5) associated with the passenger station.

11. Device for actuating a movable vehicle windshield, wherein the windshield (4) has a raisable and lowerable support frame (6) with which an actuation mechanism (10) is associated, **characterised in that** said actuation mechanism (10) includes a horizontal actuator (11) arranged beneath the windshield (4) articulated beneath the vehicle and connected to said support framework (6) by means of an articulated linkage (13) which controls the angular displacement thereof around a lower transversal axis (7).

12. Actuation device according to claim 11, **characterised in that** said articulated linkage (13) comprises a generally triangular-shaped rotary cam (14) having a first vertex (16) articulated to said horizontal actuator (11), a second vertex (17) with which there is articulated the lower end of a substantially vertical connecting rod (15), whose upper end is articulated to said support frame (6), and a third vertex pivoted around a horizontal rotation axis (19) of the cam (14).

13. Actuation device according to claim 11 or claim 12, **characterised in that** said horizontal actuator (11) consists of an electric jack.
